Europäisches Patentamt

European Patent Office

Office européen des brevets

(11) Publication number: **0 182 945**
A1

# (12) EUROPEAN PATENT APPLICATION

(21) Application number: **84308229.8**

(22) Date of filing: **28.11.84**

(51) Int. Cl.⁴: **B 21 C 47/00**
**B 65 H 18/10, B 23 D 19/06**

(43) Date of publication of application:
**04.06.86 Bulletin 86/23**

(84) Designated Contracting States:
**CH DE FR GB LI**

(71) Applicant: PRECISION STRIP, INC.
Third and Ohio Streets
Minster Ohio 45865(US)

(72) Inventor: Eiting, John Ralph
4 Oakcreek Drive
Minster, Ohio 45865(US)

(74) Representative: Allen, Oliver John Richard et al,
Lloyd Wise, Tregear & Co. Norman House 105-109 Strand
London, WC2R 0AE(GB)

(54) Scroll slitting and rewind apparatus.

(57) A scroll-slitting apparatus (10) including multiple sets of mating scroll slitting knives (38, 40), a recoiler (20) and a looping pit (16) positioned between the scroll-slitting knives (38, 40) and the recoiler (20).

The looping pit (16) permits slack to be placed in the strips (24, 26, 28) between the slitting station (14) and the rewind station (20) such that the strips (24, 26, 28) may all be spaced apart, thereby enabling all the strips (24, 26, 28) to be rewound onto a common arbor or shaft (50).

./...

FIGURE 1

SCROLL SLITTING AND REWIND APPARATUS

This invention relates to a slitting machine and particularly to a slitting machine or apparatus for scroll slitting a web of sheet metal or similar material into multiple scrolls or strips having scroll shaped edges.

In order to form a plurality of relatively narrow strips from a single relatively wide web or strip of sheet metal, it is well-known to use a slitting line. Slitting lines basically consist of an uncoiler from which a wide web of sheet metal is unwound from a coil, a slitter which slits the webs into a plurality of strips, and a recoiling mechanism which recoils or winds the plurality of strips onto one or more arbors.

The slitting mechanism typically includes upper and lower arbors which are rotatably mounted in housings. Each arbor includes a plurality of rotary cutting members positioned so that the cutting members on the upper arbor intermesh or mate with the cutting members on the lower arbor to provide a scissors-like cutting or slitting operation upon a web or metallic material.

If strips are to be formed having rectilinear longitudinal edges, the rotary cutting members mounted on the arbors are all essentially disc shaped, having circular cutting edges. However, if the slitter is adapted to form strips having curvilinear longitudinal edges, the cutting members or knives are provided with serpentine or sinuous cutting edges. Slitters of this latter type are known as scroll slitters.

It is often desirable to slit a metallic web into strips having serpentine or curvilinear longitudinal edges if circular or disc shaped pieces are to be formed from the slit strips. Examples of products formed from such serpentine or curvilinear longitudinal edge shaped pieces are can ends, motor armatures, and stators and backing plates. The serpentine edges reduce the amount of scrap material wasted in the forming of the disc shaped pieces from the strip. An example of this type of slitting process is disclosed in U.S. Patent No. 3,517,532 and in U.S. Patent No. 3,388,582.

One problem which has been common to all prior art scroll slitting lines has been that of rewinding or recoiling the scroll slit strips. This problem is attributable to the fact that to some degree there is "crown" in every wide web of sheet metal rolled stock. The strip is thicker in the centre than at either edge and one edge is generally thicker than the other, so a cross section through a strip is generally shaped like a convex lens instead of having parallel flat top and bottom surfaces. The crown creates handling problems when the web or strip is subsequently slit. Because of the crown, the centre strips of each web are thicker than the outer edge or side strips so after being slit, the side strips wrap more loosely than the thicker centre strips. Consequently, the loose side strips when rewound or recoiled upon a recoiling mandrel present a handling problem because the loosely wound side strips tend to slide around and abrade each other.

This "crown" or varying cross sectional thickness through a web presents a particularly acute problem in the case of scroll slitting. Heretofore, it has never been possible to rewind scroll slit strips onto a common recoil or rewinding mandrel because the differing cross sectional thickness of the webs resulted in the sinuous shaped edges of the scroll slit strips overlapping each other. This overlap is absolutely unacceptable because it precludes one strip from being unwound from the coil if it is interleaved with other strips, etc. Consequently, in the past it has been the practice to rewind or recoil the scroll slit strips on multilple arbors so that the adjacent scroll slit strips end up being wound upon different arbors. In other words, if there were three scroll slit strips cut from a common web, the centremost scroll slit strip would be wound on one arbor and the two outer or spaced strips would be wound upon a second arbor. This practice though is undesirable because it requires two rewinding stations or recoilers, thus increasing capital equipment costs, and additionally requires the handling of at least two recoiling mandrels with consequent increased handling and processing costs. It would be preferable to have all the strips wound upon a single mandrel.

A slitting and rewinding apparatus in accordance with this invention comprises a scroll slitting station including a pair of spaced arbors and a plurality of pairs of mating scroll slitting knives mounted upon said arbors, each of said scroll slitting knives having a serpentine shaped scroll slitting knife edge for cutting said web of sheet stock material into multiple scroll slit strips and a recoiling station located downstream from said slitting station, said recoiling station including means for supporting a single rewind arbor and means for driving said rewind arbor in rotation to rewind all of the scroll slit strips of said web of stock material onto said single arbor without any overlap of said strips on said single arbor.

Preferably a looping pit is provided between the slitting station and the recoiler or rewind station of a scroll slitting line and guide spaces are provided between the strips in the slack strips as those strips emerge from the looping pit and before tension is placed upon the strips for feed onto the rewind or recoiler mandrel. By providing this slack in the strips, or at the very minimum in the edgemost strips, those strips may be moved laterally relative to the centre strips so as to provide spacing between the strips at least equal to the amplitude of the sinuous scroll on the edge of the strips. Rewinding tension is only placed on the strips after this spacing is achieved in the slack strips. As so spaced then, the strips may all be wound upon a common recoiler mandrel.

Such apparatus enables all of the scroll slit strips to be rewound upon a common mandrel without any overlap of the scroll shaped edges of the multiple strips and to incorporate only a single rewind recoiler operable to rewind all of the scroll slit strips of a common web upon a single common mandrel.

The elimination of the need for multiple recoiling mandrels on a single scroll slitting line, substantially reduces the capital equipment cost of a scoll slitting line.

As all of the strips cut from a common web of sheet metal material may be rewound onto a common mandrel, subsequent handling, processing, and transportation charges are substantially reduced relative to a scroll slitting line wherein the strips are placed upon multiple mandrels.

The invention will now be further described by way of example with reference to the accompanying drawings in which:

Figure 1 is a perspective partially diagrammatic view of a scroll slitting line incorporating the invention of this application,

Figure 2 is a partially diagrammatic perspective view of a prior art scroll slitting line wherein the multiple scroll slit strips are rewound upon multiple mandrels,

Figure 3 is a diagrammatic cross sectional view through a coil of sheet metal rolled stock material illustrating the "crown" present on all coils of rolled sheet metal stock, and

Figure 4 is an end elevational view taken on line 4-4 of Figure 1 illustrating the varying diameter of the different strips when tightly wound upon a common mandrel.

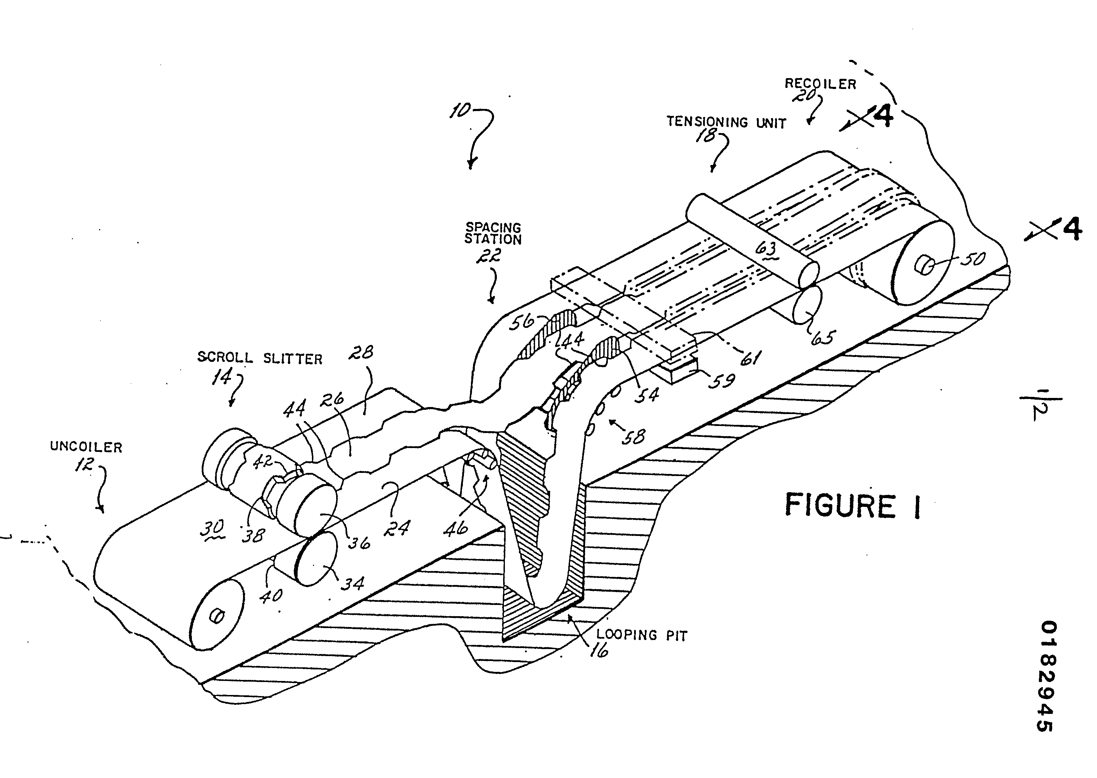

Referring to Figure 1, there is illustrated a scroll slitting line 10 incorporating the invention of this application. This line 10 compirses an uncoiler station 12, a scroll slitting station 14, a looping pit 16, a tensioning station 18, and a recoiling station 20. Immediately upstream of the tensioning station 18, and as explained more fully hereinafter, there are stationary spacers located at a spacing station 22 for establishing a gap between the scroll slit strips 24, 26 and 28 cut from the web 30 of rolled sheet metal stock metal.

The uncoiler 12 is conventional and forms no part of the invention of this application. Basically, it comprises a motor driven mandrel upon which a coil of web stock 10 is mounted for feed into the scroll slitter.

The scroll slitter 14 is also, for purposes of this application, conventional and per se forms no part of the invention of this application. One scroll slitter suitable for use in this application is fully disclosed in U.S. Patent Application Serial No. 393,832, filed June 30, 1982, and assigned to the assignee of this application. Other scroll slitters suitable for use in this application are disclosed in U.S. Patent No. 3,517,532 and U.S. Patent No. 3,388,582.

The scroll slitter 14 includes a pair of motor driven arbors 34, 36 upon which there are mounted pairs of mating knives 38,40. These knives 38, 40 have intermeshing scroll shaped or sinusoidal wave shaped edges 42 which overlap to form a scissors-like cutting action of any material, such as the web of stock material 30 passed between the knives 38, 40. As illustrated in Figure 1, three strips 24,26 and 28 of scroll slit material result from passage between the knives 38,40 of the scroll slitter 14. The scissors cutting action of these knives 38 and 40 forms scroll or sinusoidal shaped edges 44 on the strip 24, 26 and 28.

As illustrated in Figure 1, the centremost strip 26 has a scroll shaped edge on both sides of the strip while the edgemost strips 24 and 28 have only a single scroll or sinusoidal shaped edge. By mounting additional cutters on the arbors 34 and 36 of the scroll slitter, the outer edges of the outermost strips 24 and 28 may have a similar scroll configuration imparted thereto or a greater number of strips could be formed having either one or both side edges of the strips cut into a scroll configuration.

After emerging from the scroll slitting station 14 the strips pass over a series of supporting rollers 46 into a looping pit 16. This pit extends a substantial distance below the floor level of the slitting line 10. The depth of the looping pit is a function of the length of the coils of web material 30 to be slit on the line. Longer strips of thin stock material require deeper pits than do heavier gauge stock material which are shorter in overall length. In our preferred embodiment of this invention, the pit extends approximately twenty feet below the floor level.

In the practice of this invention the looping pit 16 serves a dual function of (a) facilitating tensioning of all three strips 24, 26 and 28 on the recoiler while differing lengths of strips are wound thereon, and (b) of permitting all three strips to be gapped a distance slightly greater than the amplitude of the scroll or sinusoidal shaped edge imparted to the strips so as to enable all of the strips to be wound onto a common mandrel 50.

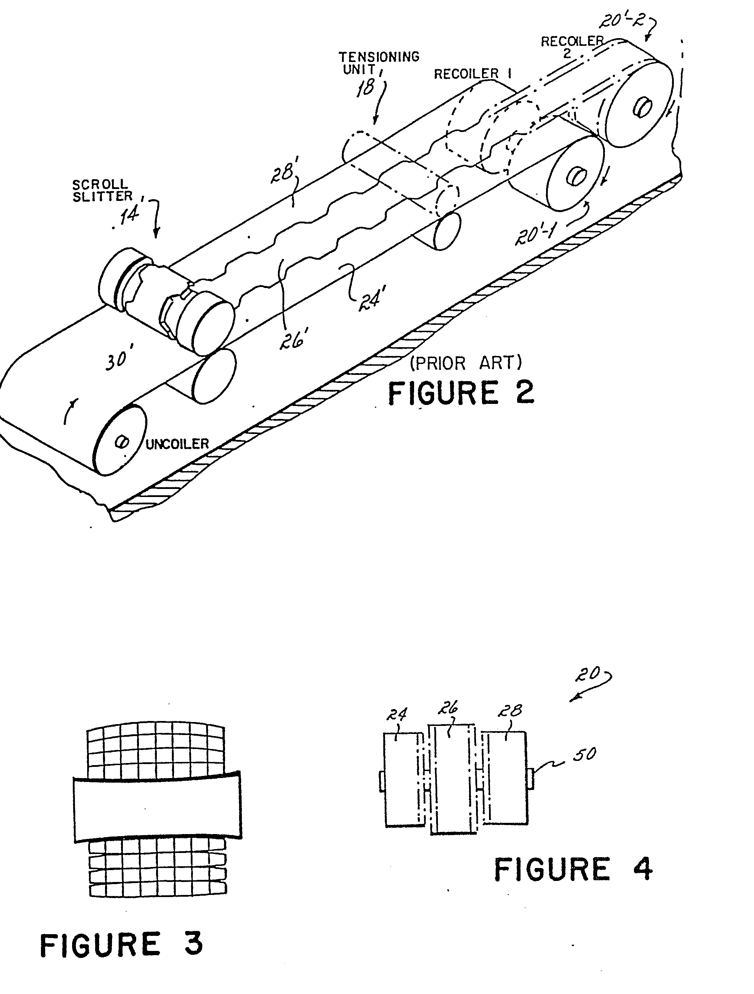

A characteristic of all rolled metal webs is that to some degree "crown" is present in every web or strip or rolled sheet metal. The webs are all thicker in the centre than at either edge, so that when viewed in cross section, the strip or web 30 is always convex, like a lens, instead of having parallel top and bottom surfaces. This crown is illustrated in Figure 3 wherein in the top half of the diagram, the crown is accentuated as if all of the cross sections of the web were equally under compression.  In actuality, the lower half of the diagram of Figure 3 better illustrates the manner in which the web 30 is rolled onto a mandrel with the centre sections of the strip tightly wound and the outer edges of the strip more loosely wound.  As a result of this differential in thickness of the web, when the web is subsequently slit into three strips and all strips are wound under tension on the roll 50, the centre strip 26 builds  to a larger diameter than the outermost strips 24 and 28. In the absence of some accommodation for this difference in diameter of the different strips, the outer strips 24 and 28 will be loosely wound on the recoiler mandrel 50, while the  centre strip 26 is tightly wound.  Loose strips are very difficult to handle because they tend to slide around and abrade each other or to telescope and create damaged edges on the loosely wound strips.  Therefore, some accommodation must be made to insure that all strips are tightly wound on the mandrel.

To combat that crown and the rewind problem created by that crown, the looping pit 16 and tension device 18 are provided between the scroll slitter head 14 and the recoiler 20. The provision of the looping pit upstream of the tensioning unit allows the thinner, looser outer strips to "mark time" until they can be rewound with the tight centre wraps. Additionally, the looping pit relieves all of the strips 24, 26 and 28 of any tension between the scroll slitter 14 and the tension unit 18 so that the strips may be fanned apart a distance slightly greater than the amplitude of the sinuous edge of the strips and thereby rewound upon a common mandrel 50. Since the three strips 24, 26 and 28 are rewound at differing rates upon the mandrel 50 of the recoiler 20, the valleys of one strip do not mate with the peaks of the adjacent strip. Therefore, unless the three strips are fanned apart a distance at least as great as the amplitude of the sinuous edge 44 on the strips, the strips will be overlapped when wound upon a common recoiler.

To establish this gap in the strips before the strips pass into the tensioning unit 18, there are stationary spacers 54, 56 located upstream of the tensioning unit at the point at which the strips emerge from the looping pit. In a preferred embodiment these spacers 54, 56 are attached to the same frame (not shown) which supports a series of rollers 58 over which the strip is guided as it emerges from the pit and before it passes into the tensioning unit 18.

The tensioning unit 18 comprises a stationary bottom pad 59 and an upper pad 61 movable downwardly under hydraulic pressure toward the stationary pad 59. In a preferred embodiment of this invention both these pads have a fabric material, as for example an outdoor rug type fabric applied to the top surface of the lower pad and the bottom surface of the upper pad. These pressure pads flatten the strips and establish alignment of the strips before the strips pass into tensioning rollers 63 and 65 at tension station 18. These tensioning rollers are conventional rubber or friction material covered rollers which have a brake applied thereto so as to tension each of the strips as those strips are pulled onto the mandrel 50 of the motor driven recoiler 20. The braking force applied to the rollers 63 and 65 of the tensioning unit 18 determines the tension applied to the strips as the strips are rewound onto the mandrel 50.

With reference now to Figure 2, there is illustrated a prior art scroll slitting line 10'. Heretofore, it has been the practice to feed the strips of scroll slit material 24' 26' and 28' directly from the scroll slitter 14' through a tensioning unit 18' and onto a pair of recoilers 20'-1 and 20'-2 the first or upstream recoiler 20'-1 of which is operable to wind the two outermost strips 24', 28' of scroll slit material while the downstream most recoiler 20'-2 winds the centre strip 26'. This was the only known method or apparatus for rewinding scroll slit strips prior to the invention of this application. It required though the use of a second recoiler to accommodate the crown of a web of sheet stock material and the spacing required to prevent overlap of scroll slit strips having a serpentine or wave shaped edge configuration.

In the practice of this invention, a web 30 of rolled stock material is unwound from a coil of sheet metal stock and passed through a scroll slitting station 14. The strips 24, 26 and 28 created by passage through the scroll slitter 14, or at least the outermost strips 24 and 28 are festooned into the looping pit following the slitter and prior to passage of the strips through the tensioning unit 18. By creating this "looseness" of the festooned strips in the looping pit, the strips may be gapped or fanned apart horizontally before the strips are fed into the tensioner 18. This spacing or lateral fanning of the strips is accomplished by the stationary spacers 54, 56 which are adjustable and set to gap each strip sufficiently far apart that the serpentine or wave-shaped edges can be wound onto a single mandrel 50 of a recoiler alongside each other without interference or overlap of the edges of adjacent strips. The spacers 54, 56 are critically spaced at the high point and exit side of the looping pit where no recoiling tension is applied to the strip. Consequently, the strips may be moved laterally or sideways at this point without damage so as to establish the appropriate gap between the strips.

Immediately following passage of the strips past the guides 54, 56, the strips are squeezed between the fabric lined wipe pads 59, 61 under a predetermined hydraulic pressure. This pressure flattens the strips and prevents any further relative lateral movement between the strips as they then are passed between the tensioning rollers 63, 65. The tensioning rollers are connected to a conventional braking system operable to establish a predetermined tension on the strips as the strips are pulled between the tensioning rollers and onto the driven mandrel 50 of the recoiler. Since the strips are tensioned while recoiled, all strips are wound under tension with a very straight wall thereby eliminating the possibility of interleaving of adjacent serpentine shaped edges of the strips. Consequently, the strips are all wound with the same horizontal gap between the strips as was fixed by the guides 54 and 56.

CLAIMS:

1.      A slitting and rewinding apparatus comprising a scroll slitting station including a pair of spaced arbors and a plurality of pairs of mating scroll slitting knives  mounted upon said arbors, each of said scroll slitting knives having a serpentine shaped scroll slitting knife edge for cutting said web of sheet stock material into multiple scroll slit strips and a recoiling station located downstream from said slitting station, said recoiling station including means for supporting a single rewind arbor and means for driving said rewind arbor in rotation to rewind all of the scroll slit strips of said web of stock material onto said single arbor without any overlap of said strips on said single arbor.

2.      A slitting and rewinding apparatus as claimed in Claim 1 including a tensioning station located upstream of the recoiling station and including means for applying a tension to scroll slit strips of the web material as the strips are wound upon the rewind arbor.

3.      A slitting and rewinding apparatus as claimed in Claim 2 including a looping pit located between the slitting station and the tensioning station, the looping pit being open at the top and extending downwardly a substantial distance below the floor level of said slitting line so as to provide for substantial slack in the strips of scroll slit web material between the slitting station and the tensioning station, and spacers located between the strips of scroll slit material upstream of the tensioning means for establishing a gap between the strips before the strips enter the tensioning means, the gap being at least equal to the amplitude of the serpentine shaped edge of the strips so that the strips do not overlap when wound onto a single rewind arbor.

4.      Cutting apparatus for cutting a single web of sheet stock material into multiple scroll cut strips, comprising a scroll cutting station including means for converting said single web of sheet stock material into multiple strips, each of said strips having at least one serpentine shaped edge, and a recoiling station located downstream from the cutting station, the recoiling station including means for supporting a single rewind arbor and means for driving the rewind arbor in rotation to rewind all of the strips onto the single arbor without any overlap of the strips on the arbor.

5.      Cutting apapratus as claimed in Claim 4 including a tensioning station located upstream of the recoiling station and including means for applying a tension to the strips of web material as the strips are wound upon the rewind arbor.

6. Cutting apparatus as claimed in Claim 5 including a looping pit located between the cutting station and the tensioning station, the looping pit being open at the top and extending downwardly a substantial distance below the floor level of the straight line path so as to provide for substantial slack in the strips between the cutting station and the tensioning station, and spacers located between the strips upstream of the tensioning means for establishing a gap between the strips before the strips enter the tensioning means, the gap being at least equal to the amplitude of the serpentine shaped edge of the strips so that the strips do not overlap when wound onto the single rewind arbor.

RECOILER
20

TENSIONING UNIT
18

X4

10

SPACING
STATION
22

X4

1/2

63

50

56

44

65

SCROLL SLITTER
28

54

59

61

14

58

44 26

UNCOILER
12

42

30 38

36 24 46

40 34

LOOPING PIT
16

FIGURE I

0182945

TENSIONING
UNIT
18

RECOILER 1

RECOILER
2

20'-2

SCROLL
SLITTER
14

28'

20'-1

24'

30'

26'

1

UNCOILER

(PRIOR ART)
**FIGURE 2**

20

24    26    28

50

**FIGURE 3**

**FIGURE 4**

European Patent
Office

**EUROPEAN SEARCH REPORT**

0182945

Application number

EP 84 30 8229

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | FR-A-1 468 856 (COMEC) * Whole document * | 1-6 | B 21 C 47/00 B 65 H 18/10 B 23 D 19/06 |
| X | DE-A-2 355 241 (AUSENDA) * Whole document * | 1,4 | |
| D,A | US-A-3 388 582 (WESSTROM) | | |
| D,A | US-A-3 517 532 (ZILKOWSKY) | | |
| A | US-A-2 849 193 (PAULS) | | |
| A | US-A-3 628 367 (WILG) | | TECHNICAL FIELDS SEARCHED (Int. Cl.4) B 23 D B 21 C B 65 H |

The present search report has been drawn up for all claims

| Place of search | Date of completion of the search | Examiner |
|---|---|---|
| THE HAGUE | 25-02-1986 | BERGHMANS H.F. |